# EUROPÄISCHE PATENTANMELDUNG

(11) **EP 2 415 966 A1**
(43) Veröffentlichungstag der Anmeldung: **08.02.2012**
(21) Anmeldenummer: 10171951.6
(22) Anmeldetag: 05.08.2010
(51) Int. Cl.: F01D 5/02, F01D 11/22, F16D 1/08

(54) **Antriebsstrang für eine Gasturbine**

(71) Anmelder: Siemens Aktiengesellschaft, 80333 München (DE)
(72) Erfinder: Braun, Stefan, 47506, Neukirchen-Vluyn (DE); Butzeck, Christopher, 45481, Mülheim (DE); Hahn, Jürgen, 44797, Bochum (DE); Schröder, Peter, 45307, Essen (DE); Wigger, Hubertus Michael, 50823, Köln (DE)

(57) **Zusammenfassung**

Die Erfindung betrifft einen Antriebsstrang für eine Gasturbine mit einer Verdichterrotorwelle (100), einer Turbinenrotorwelle (200) und einer die beiden Rotorwellen verbindende kraftschlüssigen Kupplungseinrichtung (310), wobei die Kupplungseinrichtung (310) so ausgebildet ist, dass die Kraftschlussverbindung auch dann gegeben ist, wenn die beiden Rotorwellen (100,200) gegeneinander verschoben sind. Dabei wird die Turbinenrotorwelle (200) an dem der Verdichterrotorwelle (100) zugewandten Ende so verlängert, dass diese in axialer Richtung (A) mit der Verdichterrotorwelle (100)überlappt und die Kupplungseinrichtung (300) dieses verlängerte Ende (210) der Turbinenrotorwelle (200) mit der Verdichterrotorwelle (100) in radialer Richtung (R) kraftschlüssig miteinander verbindet.

## Beschreibung

Die Erfindung betrifft einen Antriebsstrang gemäß dem Oberbegriff des Anspruchs 1, eine entsprechende Gasturbine gemäß Anspruch 6, sowie demgemäße Rotorwellen für den Verdichter und die Turbine einer solchen Gasturbine.

Gasturbinen umfassen im Wesentlichen einen Verdichter und eine nachgeschaltete Turbine, die über eine gemeinsame Rotorwelle in axialer Richtung verbunden sind. Wie bei jeder Maschine zur Energieerzeugung ist ein möglichst hoher Wirkungsgrad, also das Verhältnis von erzeugter zur eingesetzten Energie eine wesentliche Größe.

Bei Gasturbinen kommt daher das Verfahren der sogenannten hydraulischen Spaltoptimierung zum Einsatz, um den Gesamtwirkungsgrad der Gasturbine zu optimieren. Dabei werden Turbine und Verdichter, die durch einen zentralen Zuganker miteinander verbunden sind, zusammen verschoben. Der Zuganker, der den gemeinsamen Rotor für Turbine und Verdichter bildet, ist dazu so gelagert und gespannt, dass er in Axialrichtung verschoben werden kann. Dadurch können zur Optimierung die Turbinenspalte zugunsten des Turbinenwirkungsgrades verschoben werden. Gleichzeitig werden durch die damit einhergehende Verschiebung des Verdichters aber auch gleichzeitig die Verdichterspalte zum Nachteil des Verdichterwirkungsgrades verstellt. Um diesen gegenläufigen Effekt zu vermeiden und damit den Gesamtwirkungsgrad weiter zu optimieren wurde bereits angedacht, diesen gemeinsamen Rotor an der Schnittstelle von Verdichter zur Turbine aufzutrennen und die beiden Rotorteile über eine axiale Kupplung kraftschlüssig zu koppeln. Die Kupplung muss dabei aber so ausgeführt sein, dass der Kraftschluss auch noch bei einer axialen Verschiebung der Turbinenrotorwelle, relativ zur Verdichterrotorwelle, gegeben ist. Somit kann die Turbine verschoben und damit deren Wirkungsgrad optimiert werden ohne, dass gleichzeitig der Verdichter verschoben werden muss. Eine Erhöhung des Turbinenwirkungsgrads durch die hydraulische Spaltoptimierung bewirkt damit nicht mehr gleichzeitig eine Verschlechterung des Verdichterwirkungsgrads, was dem eigentlichen Ziel entgegenwirken würde.

Aufgabe der Erfindung ist es, einen weiter verbesserten Antriebsstrang für eine Gasturbine herzustellen.

Diese Aufgabe wird gelöst mit einem Antriebsstrang für eine Gasturbine, mit einer Verdichterrotorwelle, einer Turbinenrotorwelle und einer die beiden Rotorwellen verbindenden kraftschlüssigen Kupplungseinrichtung, wobei die Kupplungseinrichtung so ausgebildet ist, dass die Kraftschlussverbindung auch dann gegeben ist, wenn die beiden Rotorwellen gegeneinander verschoben sind und wobei die Turbinenrotorwelle an dem der Verdichterrotorwelle zugewandten Ende so verlängert wird, dass diese in axialer Richtung mit der Verdichterrotorwelle überlappt und die Kupplungseinrichtung dieses verlängerte Ende der Turbinenrotorwelle mit der Verdichterrotorwelle in radialer Richtung kraftschlüssig miteinander verbindet.

Durch die Verlängerung der Turbinenrotorwelle, insbesondere über die gesamte axiale Länge der Verdichterrotorwelle hinaus, ist eine besonders große Auflagefläche für die kraftschlüssige Kupplungseinrichtung und damit die Momentenübertragung von Verdichter zur Turbine gegeben. Ist die Verdichterrotorwelle als Hohlwelle ausgeführt, kann das verlängerte Ende der Turbinenrotorwelle durch diese hindurchgeführt werden, so dass beide Rotorwellen in der Gasturbine eine gemeinsame Achse aufweisen. Wird die Kupplungseinrichtung in zwei Bereiche, die sich an den beiden Enden der Verdichterrotorwelle befinden, aufgeteilt, besteht eine besonders robuste Kupplungseinrichtung.

Werden im Antriebsstrang zwei Lager, eines zur axialen Verschiebung der Verdichterrotorwelle und eines zur axialen Verschiebung der Turbinenrotorwelle vorgesehen, können sowohl Verdichter als auch Turbine in Bezug auf das Gasturbinengehäuse unabhängig voneinander verschoben werden. Die Spaltoptimierung kann somit für beide Teile getrennt voneinander erfolgen, so dass ein optimaler Gesamtwirkungsgrad der Gasturbine erreicht werden kann. Wirkungsgradverluste im Verdichter, die bei bekannten starren Kopplungen der beiden Wellen aufgrund einer axialen Verschiebung zugunsten des Turbinenwirkungsgrads entstehen, können so vermieden werden. Durch die Kombination der erfindungsgemäßen Ausbildung der beiden Rotorwellen und der Kupplungseinrichtung mit den beiden Lagern zur axialen Verschiebung kann somit eine Spaltoptimierung im Verdichter als auch in der Turbine unabhängig voneinander erfolgen, ohne dass die Funktionsweise des Antriebsstrangs eingeschränkt wird. Durch eine solche individuelle Einstellung lässt sich die Gasturbine auch in einem erweiterten Betriebsbereich, wie beispielsweise Teillast oder Heißstart, betreiben. So kann es insbesondere beim Heißstart notwendig sein, die Spalte sogar zu vergrößern, um ein Anstreifen der Verdichterschaufeln am Gehäuse in diesem kritischen Zustand zu vermeiden.

Die Erfindung soll nun anhand der nachfolgenden Figuren beispielhaft erläutert werden. Es zeigen:
- FIG 1: schematisch eine bekannter Antriebsstrang einer Gasturbine,
- FIG 2: schematisch eine erste erfindungsgemäße Ausbildung der Kupplungseinrichtung,
- FIG 3: ein Schnitt durch das in FIG 2 gezeigte Ausführungsbeispiel.
- FIG 4: schematisch ein zweites Ausführungsbeispiel.

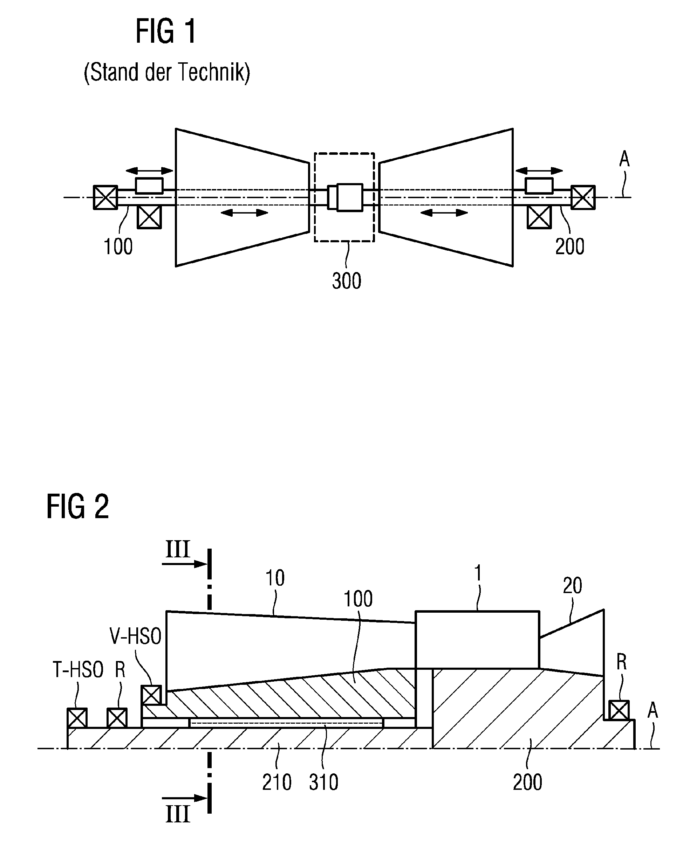

Der in FIG 1 schematisch dargestellte bekannte Antriebsstrang für eine Gasturbine besteht aus einem Verdichter mit einer Verdichterrotorwelle 100, einer Turbine mit einer Turbinenrotorwelle 200 und einer kraftschlüssigen Kupplungseinrichtung 300 zwischen Verdichter- und Turbinenrotorwelle. Über entsprechende Auflager (schematisch angedeutet) sind die beiden Rotorwellen 100 und 200 so gelagert und gespannt, dass eine axiale Verschiebung beider Achsen möglich ist. Die Kupplung 300 ist dabei so ausgebildet, dass der Kraftschluss auch noch bei einer definierten Verschiebung der beiden Rotorwellen zu- bzw. gegeneinander gegeben ist.

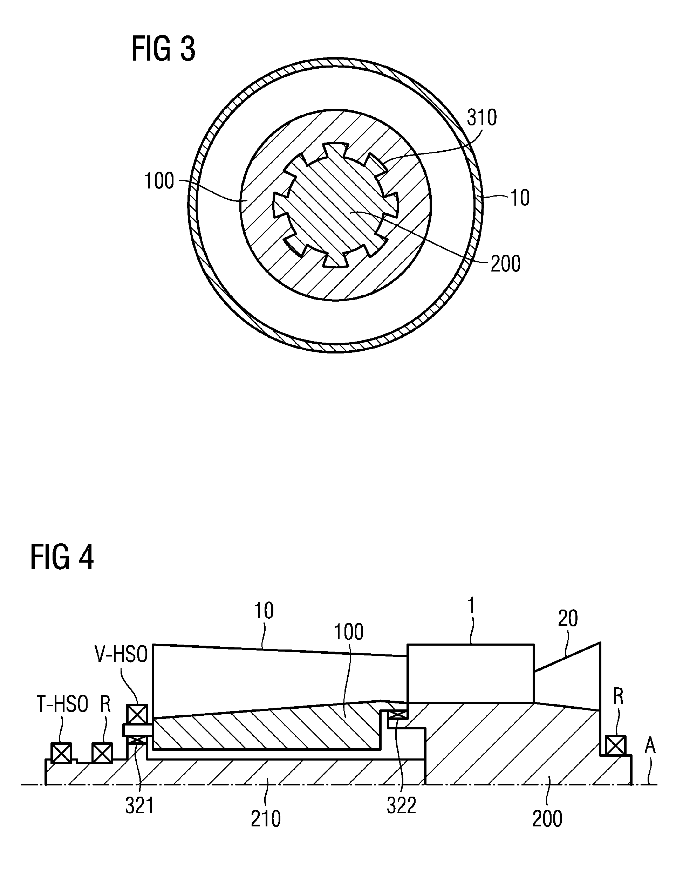

FIG 2 zeigt schematisch eine erste konkrete Ausführungsform des erfindungsgemäßen Antriebsstrangs. Die Rotorwelle 200 der Turbine ist hier, soweit in Richtung des Verdichters verlängert, dass das verlängerte Ende 210 nun die Verdichterrotorwelle 100 überlappt. Über hier nur angedeutete Lager R ist diese verlängerte Turbinenrotorwelle 200 in bekannter Weise gelagert. Zudem ist ein weiteres Lager T-HSO zur hydraulischen Spaltoptimierung vorgesehen. Die Verdichterrotorwelle 100 ist in dem hier dargestellten Ausführungsbeispiel als Hohlwelle ausgeführt, die zudem ein Lager V-HSO für eine axiale Verschiebung zum Zwecke der hydraulischen Spaltoptimierung aufweist. Dadurch, dass die Turbinenrotorwelle 200 über die Verdichterrotorwelle 100 hinaus verlängert ist, kann die Kupplungseinrichtung 300 großflächig über den Umfang der Turbinenrotorwellenverlängerung 210 ausgebildet werden. Die Turbinenrotorwellenverlängerung 210 bildet hier somit zugleich das Lager für den Verdichter. Wie anhand des in FIG 3 dargestellten Schnitts durch den Antriebsstrang zu sehen ist, kann die Kupplungseinrichtung beispielsweise als Keilwellenverbindung 310 ausgebildet sein. Ein Keilwellenkranz der Keilwellenverbindung 310 erstreckt sich dabei auf einer Innenfläche der als Hohlwelle ausgebildeten Verdichterrotorwelle 100 und der zweite, mit dem ersten Keilwellenkranz korrespondierende, Keilwellenkranz erstreckt sich auf der Außenfläche des verlängerten Endes 210 der Turbinenrotorwelle 200. Beide Keilwellenkränze greifen dabei so ineinander, dass die kraftschlüssige Kupplung der Verdichterrotorwelle 100 mit der Turbinenrotorwelle 200 gewährleistet ist. Zum besseren Verständnis der Anordnung innerhalb der Gasturbine wurde in FIG 3 und FIG 2 zudem noch der ringförmige Strömungskanal 10 des Verdichters und in FIG 2 außerdem der Strömungskanal 20 der Turbine, sowie die Brennkammer 1 der Gasturbine angedeutet.

FIG 4 zeigt eine alternative Ausführung bei der die Kupplungseinrichtung in zwei Bereiche 321 und 322 an den beiden Seiten der Verdichterrotorwelle aufgeteilt ist. Die Verzahnung und damit die kraftschlüssige Kupplung zwischen Verdichter- und Turbinenrotorwelle kann dabei auch so wie in FIG 3 gezeigt, ausgebildet sein. Im Übrigen weist sie die gleichen Merkmale wie die Ausführung aus FIG 2 auf.

Die vorliegende Erfindung ist nicht beschränkt auf die zuvor beschriebenen Ausführungen. Vielmehr sind auch Kombinationen, Abwandlungen bzw. Ergänzungen einzelner Merkmale denkbar, die zu weiteren möglichen Ausführungsformen der erfinderischen Idee führen können. So könnte beispielsweise auch die Verdichterrotorwelle in geeigneter Weise verlängert werden und in eine als Hohlwelle ausgebildete Turbinenrotorwelle eingreifen. Zudem könnten die Kupplungseinrichtungen der beiden gezeigten Ausführungen kombiniert werden, um eine noch bessere Momentenübertragung zu erreichen. Wesentlich dabei ist immer, dass der erfindungsgemäße Antriebsstrang so ausgebildet ist, dass bei einer hydraulischen Spaltoptimierung die Wirkungsgradverluste im Verdichter nicht erhöht werden und durch ein separates Verschieben des Verdichters, ggf. sogar verbessert werden können. So könnte durch solch eine separate Spaltoptimierung auf Seiten des Verdichters über den Normalzustand hinaus, ein zusätzlicher Wirkungsgradgewinn und ein erweiterter Betriebsbereich der gesamten Gasturbine, erreicht werden. Durch die getrennte Verschiebung von Verdichter und Turbine, relativ zum Gehäuse der Gasturbine und die damit erzielte getrennte Spaltoptimierung, kann die Gasturbine an den jeweiligen Strömungszustand angepasst und somit auch im Teillastbetrieb eingesetzt werden.

## Patentansprüche

1. Antriebsstrang für eine Gasturbine mit einer Verdichterrotorwelle (100), einer Turbinenrotorwelle (200) und einer die beiden Rotorwellen (100,200) verbindenden kraftschlüssigen Kupplungseinrichtung (300), wobei die Kupplungseinrichtung (300) so ausgebildet ist, dass die Kraftschlussverbindung auch dann gegeben ist, wenn die beiden Rotorwellen (100,200) gegeneinander verschoben sind,
**dadurch gekennzeichnet, dass** die Turbinenrotorwelle (200) an dem der Verdichterrotorwelle (100) zugewandten Ende so verlängert wird, dass diese in axialer Richtung (A) mit der Verdichterrotorwelle (100) überlappt und die Kupplungseinrichtung (300) dieses verlängerte Ende (210) der Turbinenrotorwelle (200) mit der Verdichterrotorwelle (100) in radialer Richtung (R) kraftschlüssig miteinander verbindet.

2. Antriebsstrang nach Anspruch 1,
**dadurch gekennzeichnet, dass** die Verdichterrotorwelle (100) als Hohlwelle ausgeführt ist durch die das verlängerte Ende (210) der Turbinenrotorwelle (200) hindurchgeführt ist.

3. Antriebsstrang nach Anspruch 1 oder 2,
**dadurch gekennzeichnet, dass** die Kupplungseinrichtung eine Keilwellenverbindung (310) ist, dessen einer Keilwellenkranz sich auf einer Innenfläche der als Hohlwelle ausgebildeten Verdichterrotorwelle in Umfangsrichtung erstreckt und dessen zweiter mit dem ersten Keilwellenkranz korrespondierender Keilwellenkranz sich auf der Außenfläche des verlängerten Endes (210) der Turbinenrotorwelle (200) in Umfangsrichtung erstreckt.

4. Antriebsstrang nach einem der Ansprüche 1 bis 3, **dadurch gekennzeichnet, dass** die Kupplungseinrichtung zwei Bereiche (321,322) zur kraftschlüssigen Verbindung von Verdichterrotorwelle (100) und Turbinenrotorwelle (200) umfasst, wobei der erste Bereich (321) sich an einem Ende der Verdichterrotorwelle (100) und der zweite Bereich (322) sich am zweiten Ende der Verdichterrotorwelle (100) befindet.

5. Antriebsstrang nach einem der Ansprüche 1 bis 4, **dadurch gekennzeichnet, dass** ein erstes Lager (V-HSO) für eine axiale Verschiebung der Verdichterrotorwelle (100) und ein zweites Lager (T-HSO) für die axiale Verschiebung der Turbinenrotorwelle (200) vorgesehen ist.

6. Gasturbine mit einem Verdichter, einer Turbine und einem Antriebsstrang nach einem der Ansprüche 1 bis 4.

7. Verdichterrotorwelle (100) für eine Gasturbine, die als Hohlwelle so ausgebildet ist, dass sie als Teil einer kraftschlüssigen Kupplungseinrichtung (310,321,322) in einem Antriebsstrang nach Anspruch 1 bis 4 Verwendung findet.

8. Turbinenrotorwelle (200) für eine Gasturbine, die an einem Ende so verlängert ist, dass sie als Teil einer kraftschlüssigen Kupplungseinrichtung (310,321,322) in einem Antriebsstrang nach Anspruch 1 bis 4 Verwendung findet.
